# EUROPÄISCHE PATENTSCHRIFT

(11) **EP 2 205 456 B1**
(45) Veröffentlichungstag und Bekanntmachung des Hinweises auf die Patenterteilung: **16.05.2012**
(21) Anmeldenummer: 08785121.8
(22) Anmeldetag: 26.07.2008
(51) Int. Cl.: B60G 17/015, B60G 17/019

(54) **VORRICHTUNG UND VERFAHREN ZUR AUTOMATISCHEN EINSTELLUNG DES HORIZONTAL-NIVEAUS EINES NUTZFAHRZEUGES**
DEVICE AND METHOD FOR AUTOMATICALLY ADJUSTING THE HORIZONTAL RIDE LEVEL OF A UTILITY VEHICLE
DISPOSITIF ET PROCÉDÉ DE RÉGLAGE AUTOMATIQUE DU NIVEAU HORIZONTAL D'UN VÉHICULE UTILITAIRE

(30) Priorität: 26.10.2007 DE 102007051262
(43) Veröffentlichungstag der Anmeldung: 14.07.2010
(73) Patentinhaber: WABCO GmbH, 30453 Hannover (DE)
(72) Erfinder: STENDER, Axel, 31787 Hameln (DE)
(74) Vertreter: Lauerwald, Jörg
(86) Internationale Anmeldenummer: PCT/EP2008/006170
(87) Internationale Veröffentlichungsnummer: WO 2009/052877

(56) Entgegenhaltungen:
- EP-A- 1 104 732
- EP-A- 1 324 053
- DE-A1- 4 131 077
- DE-A1- 10 022 834
- FR-A- 2 809 196
- US-A- 2 993 705
- US-A- 4 658 508

## Beschreibung

Die vorliegende Erfindung betrifft eine Vorrichtung und ein Verfahren zur automatischen Einstellung des Horizontal-Niveaus eines Nutzfahrzeuges, das einen Aufbau, insbesondere mit einem um eine Längs- oder Querachse schwenkbaren Körper aufweist, mit einer Einrichtung zur Niveauregulierung, die längenverstellbare Federelemente und eine Steuereinheit aufweist.

Nutzfahrzeuge (im Weiteren zur besseren Lesbarkeit auch als "Fahrzeug" bezeichnet), die sich auf schrägen Flächen befinden oder fortbewegen, sind insbesondere im Falle eines hohen Körperschwerpunktes einer erhöhten Gefahr eines Umkippens ausgesetzt. Insbesondere erhöht sich die Gefahr des Umkippens für Fahrzeuge, auf deren Aufbau ein schwenkbarer Körper wie beispielsweise eine Kippmulde oder Kran montiert ist. Wird die Schwenkbewegung des Körpers ausgeführt, während sich das Fahrzeug auf einem schrägen Untergrund befindet und der Fahrzeug-Aufbau aufgrund dessen seitlich geneigt ist, und bewegt sich der schwenkbare Körper in die Richtung der Fahrzeugneigung, so führt dies auch zu einer Verschiebung des Körperschwerpunkts in dieselbe Richtung.

Wird der Körper so weit geschwenkt, dass der Vektor der im Körperschwerpunkt zusammengefassten Gewichtskraft nicht länger die Unterstützungsfläche des Fahrzeugs durchdringt, verursacht das daraus resultierende Moment ein Umkippen des Fahrzeugs.

Um die Gefahr eines solchen Umkippens zu verhindern, kommen Vorrichtungen zur Niveauregulierung zum Einsatz. Mit ihrer Hilfe lässt sich der Abstand der Räder zum Fahrzeug-Aufbau entweder für jedes Rad einzeln, für Radpaare oder Achspaare verändern. Dies geschieht zumeist mittels einer elektronischen Steuereinheit, die manuell über eine Bedieneinheit bedient wird, aufgrund einer visuellen Abschätzung der Neigung durch den Fahrzeugführer. Vorrichtungen dieser Art für Fahrwerke mit Luftfederung sind unter der Abkürzung ECAS der Anmelderin bekannt und kommerziell erhältlich. Außerdem existieren Ausführungen mit mechanischen Ventilen - so genannten Drehschieberventilen.

Es sind weiterhin automatische Ausgleichsvorrichtungen bekannt, welche die Längenänderungen der Federelemente auf einer Fahrzeugseite mittels Wegsensoren erfassen und einem programmierten Algorithmus folgend die Ausgleichsbewegung einleiten. Ein solches Verfahren ist aus der gattungsbildenden DE 100 22 834 A1 bekannt.

Den vorbekannten Verfahren ist der Nachteil gemein, dass die tatsächliche Neigung nicht auf direkte Weise erfasst wird. Die Seite des Nutzfahrzeuges, zu welcher dies geneigt ist, kann beispielsweise in aufgeweichtem Boden, der im Gelände, auf unbefestigten Wegen oder auf Baustellen regelmäßig anzufinden ist, einsinken. Dies wird weder von den vorbekannten Vorrichtungen noch vom Fahrzeugführer zuverlässig bemerkt.

Hieraus ergibt sich die der Erfindung zugrunde liegende Aufgabe, ein Verfahren und eine Vorrichtung anzugeben, welche die Zuverlässigkeit bei der Regulierung von untergrund- oder lastverteilungsbedingter Fahrzeug-Neigung verbessern.

Die vorliegende Erfindung löst die Aufgabe durch eine Vorrichtung mit den Merkmalen des Anspruchs 1.

Der Erfindung liegt die Einsicht zugrunde, dass die sich einstellende Neigung des Fahrzeugaufbaus relativ zur Horizontalen auf zuverlässige Weise durch Sensoren erfasst werden sollte, die direkte Informationen über den Neigungswinkel erfassen. Verändert sich der Neigungswinkel während eines Schwenkvorgangs oder aufgrund veränderlicher Bodenverhältnisse, ist somit gewährleistet, dass die erfasste Neigung der tatsächlichen Neigung des Fahrzeugaufbaus entspricht. Demzufolge sind die erfindungsgemäßen Sensoren in der Lage, unabhängig von der Position des Fahrzeugs und der Aufmerksamkeit des Fahrzeugführers den aktuellen Neigungswinkel zu erfassen und eine angemessene Niveau-Regulierung einzuleiten.

Der erfindungsgemäße Querbeschleunigungssensor erfasst im Stillstand oder bei gerader und langsamer Fahrt des Nutzfahrzeugs die Neigung des Fahrzeug-Aufbaus relativ zur Horizontalen.

In einer bevorzugten Ausführungsform ist der Sensor zur Ausgabe eines Signals ausgebildet, welches dem von dem Sensor erfassten Winkel zwischen dem Fahrzeug-Aufbau und der Horizontalen zugeordnet ist, und über Datenübertragungsmittel mit der Steuereinheit verbunden. So kann auch ein Warnsignal erzeugt werden. Die Datenübertragungsmittel sind regelmäßig durch Kabelleitungen ausgeführt, allerdings können erforderlichenfalls auch drahtlose Übertragungsmethoden zum Einsatz kommen.

In einer weiteren bevorzugten Ausführungsform ist die Steuereinheit dazu ausgebildet, abhängig von dem empfangenen Signal des Sensors eine Längenverstellung der Federelemente zu bewirken oder zu veranlassen. Abhängig von der Art der Federelemente setzt die Steuereinheit den auszugleichenden Winkel in eine Längenverstellung des Federwegs um. Dies kann bei Schraubenfedern durch Verstellen eines Anschlagringes mit einem Gewinde an einer Stellspindel erfolgen, oder bei pneumatischen Federbälgen durch Erhöhung der Luftmenge im Inneren des Balgs.

In einer vorteilhaften Ausführungsform der Erfindung sind die Federelemente durch Luftfederbälge ausgebildet. Über den guten Federungskomfort solcher Federungssysteme hinaus sind die Luftfederbälge gut geeignet, durch Erhöhung der Luftmenge oder Ablassen von selbiger die Länge des Federweges und somit des Fahrzeugniveaus schnell und über einen angemessen großen Verstellbereich x₀ ≤ x ≤ xₘₐₓ einzustellen.

In einer weiteren Ausführungsform der Erfindung weisen die Federelemente zwischen einer Mindestlänge und einer Höchstlänge xₘₐₓ einen stufenlosen Verstellbereich auf. Auf die Weise sind die Federelemente geeignet, mit zwischen der Mindestlänge x₀ und der Höchstlänge xₘₐₓ liegenden Verstell-Längen einen Neigungswinkel α auszugleichen, der einen Grenzwinkel α_{Grenz} nicht überschreitet.

In einer weiteren erfindungsgemäßen Ausführungsform arbeitet der Sensor weiterhin während der Fahrt des Fahrzeugs mit einem elektronischen Bremssystem (EBS) und / oder einem Stabilitätssystem (RSS) zusammen. Zum Vermindern des Umkipp-Risikos beispielsweise aufgrund von dynamischen Fahrwerksbelastungen kommen in vorbekannten Systemen beispielsweise Querbeschleunigungssensoren zur Ermittlung von gefährlichen Fahrsituationen zum Einsatz. Die Nutzung eines in Verbindung mit einem RSS- (Roll Stability Support) oder EBS- (Electronic Braking System) System installierten QuerbeschleunigungsSensors ist besonders vorteilhaft, da zusätzliche Bauteile und Kosten gespart werden können.

In einer vorteilhaften Ausführungsform der Erfindung ist die Steuereinheit ausgebildet, ein Warnsignal auszugeben, falls ein Zustand vorliegt, in dem trotz ausgeschöpfter Längenverstellung der Federelemente von dem Sensor ein Signal übermittelt wird, das einem Winkel α zwischen dem Fahrzeugaufbau und der Horizontalen zuzuordnen ist, welcher einen Grenzwert α_{Grenz} überschreitet. Ein solches Warnsignal kann einerseits ein optisches Signal, akustisches Signal oder eine Kombination mehrerer Signalarten sein. Ein weiterer möglicher Sicherheitsaspekt wäre ein Not-Stopp des Schwenkvorgangs, damit ein Kippen verhindert werden kann.

Gemäß einer weiteren Ausführungsform ist die Einrichtung zur Niveauregulierung als eine ECAS-2-Punktregelung ausgebildet. Dies bringt den Vorteil mit sich, dass die Komponenten des schon installierten Systems auf einfache Art zur Durchführung der erfindungsgemäßen Funktion genutzt werden können, ohne dass der Einbau von zusätzlichen Bauteilen erforderlich wird.

In einem weiteren Aspekt der Erfindung ist der schwenkbare Körper insbesondere eine Seiten- oder Heck-Kippmulde oder ein Kran oder ein Teil einer Waffe.

Die vorliegende Erfindung löst die Aufgabe weiterhin durch ein Verfahren der eingangs genannten Art, gekennzeichnet durch die Schritte der Erfassung eines Winkels zwischen dem Aufbau und der Horizontalen durch einen Querbeschleunigungssensor und die Auslösung der Niveauregulierung durch die Steuereinheit in Abhängigkeit von dem erfassten Winkel.

In einem weiteren Aspekt des erfindungsgemäßen Verfahrens gibt der Sensor nach Erfassung des Winkels zwischen dem Aufbau und der Horizontalen ein Signal aus, das dem erfassten Winkel zugeordnet ist, und übergeben das Signal mittels Datenübertragung an die Steuereinheit.

In einer bevorzugten Ausführungsform des erfindungsgemäßen Verfahrens bewirkt die Steuereinheit von dem empfangenen Signal des Sensors eine Längenverstellung der Federelemente.

Gemäß einer weiteren Ausführungsform des vorliegenden Verfahrens gibt die Steuereinheit ein Warnsignal aus, falls trotz der Ausschöpfung des gesamten Verstellweges x=xₘₐₓ der Federelemente ein Signal vom Sensor übermittelt wird, das einem Winkel α zwischen dem Aufbau und der Horizontalen zuzuordnen ist, der einen Grenzwert α_{Grenz} überschreitet.

In einer vorteilhaften Weiterbildung des Verfahrens der vorliegenden Erfindung bewirkt die Steuereinheit vor Beginn eines Schwenkvorgangs, insbesondere eines Seiten- oder Heck-Kippvorgangs, eine maximale Verkürzung der Federelemente zur Absenkung des Körperschwerpunktes des Aufbaus. Wird die kürzeste Länge der Federelemente x₀ auf allen Federelementen eingestellt, nimmt der Abstand des Körperschwerpunkt zu den Achsen des Fahrzeugs in vertikaler Richtung einen Minimalwert an, und der Winkel, der ohne die Durchführung eines Schwenkvorgangs und ohne Durchführung einer Niveauregulierung zum Umkippen des Fahrzeugs führen würde, ist maximiert.

In einer weiteren Ausführungsform des erfindungsgemäßen Verfahrens erfolgt die Niveauregulierung während der Fahrt des Fahrzeugs unterhalb einer Grenzgeschwindigkeit v_{Grenz}. Da das Fahrzeug zur Verbesserung der Kippstabilität vor Beginn des Schwenkvorgangs auf die geringste Verstell-Länge der Federelemente abgesenkt wird, ist ein Fahrbetrieb in diesem Zustand nur bedingt möglich. Aus diesem Grund ist in einer Ausführungsform der Erfindung zunächst vorgesehen, die Geschwindigkeit, mit der das Fahrzeug in abgesenktem Zustand fahren kann, zu begrenzen.

In einer weiteren Ausführungsform des erfindungsgemäßen Verfahrens erfolgt die Niveau-Regulierung während der Fahrt des Nutzfahrzeugs unterhalb einer Grenzgeschwindigkeit. Für einige Anwendungszwecke, insbesondere für Militärfahrzeuge und Landmaschinen kann es erforderlich sein, eine Niveau-Regulierung während der Fahrt durchzuführen. In diesem Fall liegt die höchste zulässige Geschwindigkeit, mit der sich das Fahrzeug fortbewegen kann, ebenfalls unterhalb einer Grenzgeschwindigkeit, die allerdings nicht den gleichen Wert einnehmen muss wie die Grenzgeschwindigkeit während der Fahrt mit abgesenktem Fahrzeug-Aufbau. Weiterhin ist es ersichtlich, dass für den Betrieb der Niveauregulierung der Fahrzeug-Aufbau nicht abgesenkt wird. Vielmehr kommt der Steuereinheit in dem Fall die Aufgabe zu, die Seite, welche der Seiten-Neigung entgegengesetzt ist, abzusenken, und falls möglich die Seite des Fahrzeugaufbaus, die auf der Neigungs-Seite liegt, anzuheben.

In einer Weiterbildung des erfindungsgemäßen Verfahrens bewirkt die Steuereinheit eine Verstellung der Federelemente auf eine Normallänge, welche zum Fahrbetrieb des Nutzfahrzeuges geeignet ist, sobald eine Grenzgeschwindigkeit überschritten wird. Diese Maßnahme wird in dem Fall angewandt, dass der Fahrzeugaufbau zuvor auf eine minimale Höhe abgesenkt wurde.

Die erfindungsgemäße Vorrichtung und das erfindungsgemäße Verfahren zeigen sich in vorteilhafter Weise in einem Nutzfahrzeug mit einem Aufbau, welcher insbesondere eine um eine Längs- oder Querachse schwenkbaren Körper aufweist, und einer Vorrichtung zur automatischen Einstellung des Horizontal-Niveaus, wobei die Vorrichtung insbesondere nach einem der Ansprüche 1 bis 10 ausgebildet ist.

In einem weiteren Aspekt der Erfindung ist das Nutzfahrzeug als ein Seiten- oder Heck-Kipplastwagen oder -Anhänger, eine Landmaschine oder ein Militärfahrzeug ausgebildet. Der Körperschwerpunkt des Fahrzeugs führt infolge einer Schwenkbewegung um eine vertikale Achse deutlich eher zu einem Verlassen eines kippstabilen Standes, da die Unterstützungsfläche des Fahrzeugs in lateraler Richtung nicht so weit reicht wie in Richtung der Längsachse des Fahrzeugs. Unter Beachtung dieses Umstandes ist der Einsatz der erfindungsgemäßen Vorrichtung und des erfindungsgemäßen Verfahrens in Kränen oder Lastkraftwagen mit Seiten-Kippmulde grundsätzlich genauso möglich wie in Lastkraftwagen mit Heck-Kippmulde. Für Militär- und landwirtschaftliche Fahrzeuge, insbesondere Traktoren, gilt dies analog. Gerade Traktoren bieten aufgrund der erhöhten Bodenfreiheit und hoher Federwege einen großen Arbeitsbereich für die Niveau-regulierung.

Im Folgenden wird die Erfindung anhand beispielhafter Ausführungsformen unter Bezugnahme auf die beiliegenden Figuren näher beschrieben. Hierbei zeigen:
Fig. 1 bis Fig. 4 eine rückwärtige Ansicht eines erfindungsgemäß ausgestatteten Nutzfahrzeuges,
Fig. 5 eine schematische Darstellung einer Ausführungsform der erfindungsgemäßen Vorrichtung, und
Fig. 6 ein Flussdiagramm einer Ausführungsform des erfindungsgemäßen Verfahrens.

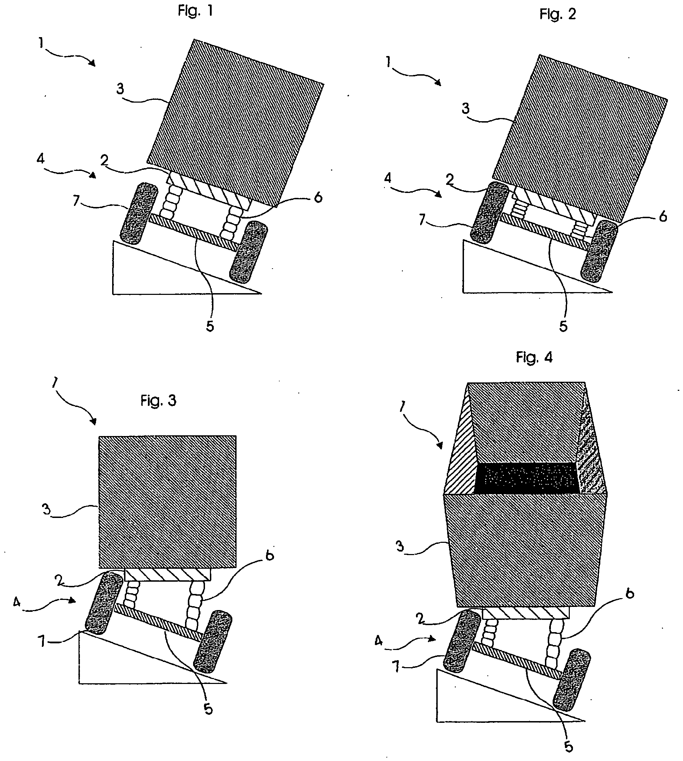

In Fig. 1 ist ein Nutzfahrzeug 1 mit einer erfindungsgemäßen Vorrichtung 8 vereinfacht dargestellt. Das dargestellte Fahrzeug weist einen Fahrzeug-Aufbau 2 auf, auf welchem ein schwenkbarer Körper 3 installiert ist. Der Fahrzeug-Aufbau 2 ist mit einem Fahrwerk 4 verbunden, welches in dieser Darstellung Achsen 5 Federelemente 6 und Räder 7 umfasst. Die Position des Fahrzeugs in Fig. 1 entspricht einer Fahrt bzw. einem Stand auf schrägem Untergrund mit einem Neigungswinkel α, die Federelemente 6 weisen eine Länge auf, die zum Fahrbetrieb geeignet ist. Im Hinblick auf das erfindungsgemäße Verfahren kann diese Position als Ausgangspunkt für die Einleitung des Verfahrens angenommen werden.

In Fig. 2 ist das gleiche Fahrzeug wie in Fig. 1 dargestellt. Die Federelemente 6 sind in dieser Darstellung auf eine Minimallänge x₀ abgesenkt. Der Körperschwerpunkt des Fahrzeugs 1 ist auf diese Weise so nah wie möglich in Richtung der Achsen 5 des Fahrzeugs 1 verlagert und weist eine größtmögliche Nähe zu der Mitte der Unterstützungsfläche auf. Die Unterstützungsfläche erstreckt sich zwischen den Achsen 5 des Fahrzeugs 1 und schließt die Kontaktfläche der Räder 7 mit dem Untergrund ein. Solange der im Körperschwerpunkt des Fahrzeugs zusammengefasste Gewichtskraftvektor die Unterstützungsfläche durchdringt, ist die Position des Fahrzeugs kippstabil. Es ist ersichtlich, dass der Körperschwerpunkt infolge eines Schwenkvorgangs an einem Zeitpunkt nicht länger die Unterstützungsfläche durchdringt, was ein Umkippen des Fahrzeugs hervorrufen kann.

Um die Gefahr des Umkippens zu verringern, wird die erfindungsgemäße Vorrichtung 8 mittels des erfindungsgemäßen Verfahrens dazu eingesetzt, den Fahrzeug-Aufbau 2 in eine horizontale Lage zu versetzen. Der Ausgleich wird durch die gezielte Verstellung der Federelemente 6 erreicht. In Fig. 3 ist das Fahrzeug aus den Fig. 1 und 2 mit einem ausgeglichenen Fahrzeug-Aufbau gezeigt. Das Federelement auf der belasteten Seite wird soweit verlängert, bis ein Ausgleich stattgefunden hat oder die maximale Verstelllänge xₘₐₓ erreicht ist. In Fig. 4 ist das Fahrzeug 1 aus den Fig. 1 bis 3 in einer Position dargestellt, in der ein Schwenkvorgang - beispielhaft der Schwenkvorgang eines Heck-Kippmulden-Aufbaus 3 - eingeleitet worden ist. Da sich der Aufbau 2 des Fahrzeugs 1 in einer horizontalen Lage befindet, bewegt sich der Körperschwerpunkt zwar in Richtung einer hinteren Fahrzeugachse 5, aber er bewegt sich nicht in lateraler Richtung. Die Unterstützungsfläche des Fahrzeugs 1 wird von dem Gewichtskraftvektor erst wesentlich später verlassen, wenn sich dieser lediglich in Richtung der Längsachse des Fahrzeugs 1 bewegt. Anhand Fig. 4 lässt sich veranschaulichen, dass in dem Fall, dass der Verstellbereich der Federelemente 6 erschöpft und ein vollständiger Ausgleich noch nicht eingetreten ist, der Körperschwerpunkt während eines Schwenkvorgangs in lateraler Richtung bewegt wird, wodurch eine Kipp-Gefahr entsteht. Falls die nach dem Erreichen der maximalen Verstelllänge xₘₐₓ der Federelemente 6 verbliebene Neigung einen Neigungswinkel α_{Grenz} überschreitet, besteht die Gefahr, dass das Fahrzeug 1 umkippt. Es sind also Maßnahmen vorzusehen, die geeignet sind, in einem solchen Fall das Auslösen eines Schwenkvorgangs zu verhindern.

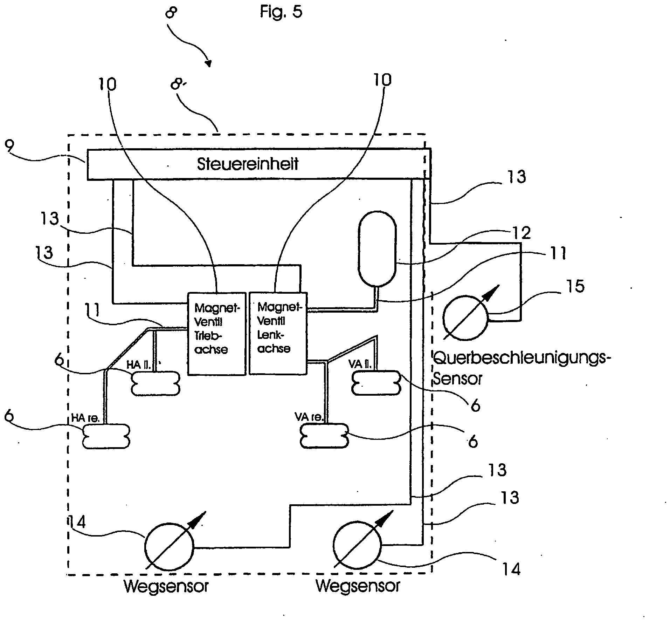

Eine Ausführungsform der erfindungsgemäßen Vorrichtung 8 ist schematisch in Fig. 5 dargestellt. Gezeigt ist hierin eine Steuereinheit 9, die über Datenübertragungsleitungen 13 mit Magnetventilen 10, Wegsensoren 14 und einem Querbeschleunigungssensor 15 verbunden ist. Die Datenübertragung kann ohne weiteres auch drahtlos erfolgen, wenn die Einbausituation oder andere Bedingungen dies erfordern. Die Steuereinheit 9, die Magnetventile 10, Federelemente 6, in der gewählten Darstellung als Luftfederbälge ausgebildet, und die Wegsensoren 14 kooperieren in der dargestellten Ausführungsform als ECAS-System mit einander. Der Querbeschleunigungssensor 15 ergänzt diese Konfiguration, um der Vorrichtung 8 die erfindungsgemäße Funktion zu ermöglichen. Die Steuereinheit 9 verarbeitet von den Sensoren 14,15 eingehende Signale. Im Sinn der Erfindung werden die von dem Querbeschleunigungssensor 15 übertragenen Signale als Winkelangaben interpretiert und mittels der Steuereinheit 9 in eine einzustellende Länge x der Federelemente 6 umgesetzt. Die Übertragung von Luft aus einem Druckbehälter 12 an die Federelemente 6 wird durch die Magnetventile 10 gesteuert, welche ihrerseits von der Steuereinheit 9 gesteuert werden. Die Druckluft wird mittels Druckleitungen 11 übertragen. In Fig. 5 sind die Magnetventile 10 so angeordnet, dass eine Niveau-Verstellung der Vorderachse und der Hinterachse vorgenommen wird, die Anordnung und Verbindung mit den Federelementen 6 kann jedoch selbstverständlich auch so erfolgen, dass jeweils eine rechte oder linke Seite des Fahrzeugs 1 oder einzelne Räder 7 angesteuert werden.

Es ist ersichtlich, dass die Erfassung und Auswertung der Signale des Querbeschleunigungssensors nicht zwangsweise von der Steuereinheit 9 vorgenommen werden müssen. Statt dessen kann auch eine separate Elektronik, beispielsweise ein elektronisches Bremssystem - die Signalerfassung und -verarbeitung übernehmen und ein entsprechendes Signal an die Steuereinheit 9 übertragen.

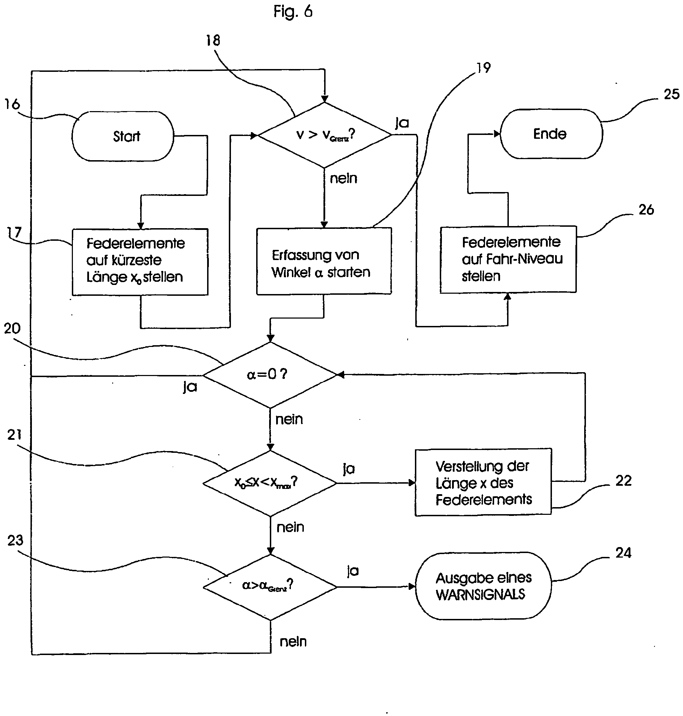

Fig. 6 zeigt ein Flussdiagramm zur Erläuterung des erfindungsgemäßen Verfahrens. Dargestellt ist in vereinfachter Form die Programmierung der Steuereinheit 9. nach Eintreten eines Startschritts 16 werden die Federelemente 6 in einem Schritt 17 durch die Steuereinheit 9 zum Anfahren der Mindestlänge x₀ angewiesen. Ist dieser Zustand erreicht, prüft die Steuereinheit 9 in einem nächsten Schritt 18, ob die Geschwindigkeit v des Fahrzeugs 1 eine kritische Geschwindigkeit v_{Grenz} überschreitet. Ist das nicht der Fall, wird in einem nächsten Schritt 19 die Erfassung des Neigungswinkels α durch die Sensormittel 15 von der Steuereinheit 9 gestartet. Überschreitet die Geschwindigkeit v allerdings den programmierten Grenzwert v_{Grenz}, werden die Federelemente 6 in einem Schritt 25 veranlasst, ein Fahr-Niveau anzufahren, und in einem Schritt 26 wird das Programm beendet.

Wenn die Erfassung des Winkels α in Schritt 19 gestartet wurde, prüft die Steuereinheit 9 in einem Schritt 20, ob ein Neigungswinkel α von, dem Querbeschleunigungssensor 15 übermittelt wird. Ist dies der Fall, springt das Programm wieder zu Schritt 17 und beginnt von neuem mit der Überprüfung der kritischen Geschwindigkeit v_{Grenz} (Schritt 18) und gegebenenfalls der Erfassung des Neigungswinkels α (Schritt 19). Ist der übermittelte Winkel α allerdings ungleich null, wird in einem nächsten Schritt 21 überprüft, ob die Federelemente 6 ihren maximalen Verstellwert xₘₐₓ schon erreicht haben, oder ob noch die Möglichkeit zur Längenverstellung besteht. Ist die aktuelle Länge x der Federelemente 6 also kleiner als xₘₐₓ, wird in einem Schritt 22 die entsprechende Verstellung der Federelemente 6 vorgenommen.

Falls die Länge x der Federelemente 6 schon ihren Wert xₘₐₓ erreicht hat - etwa infolge wiederholter Nachjustierung während des Betriebs des Fahrzeugs 1 oder aufgrund zu starker Neigung α des Untergrundes - wird von der Steuereinheit 9 in einem nächsten Schritt 23 überprüft, ob der verbliebene Neigungswinkel α einen kritischen Neigungswinkel α_{Grenz} überschreitet. Ist das der Fall, wird in einem nächsten Schritt 24 ein Warnsignal ausgegeben, was das Vorliegen einer Kipp-Gefahr signalisiert. Falls der verbliebene Winkel α den Grenzwert α_{Grenz} nicht überschreitet, springt die Programmierung wieder zu Schritt 17.

Das Programm wird beendet, wenn nach erfolgtem Schwenkvorgang die Geschwindigkeit v des Fahrzeugs 1 den Grenzwert v_{Grenz} überschreitet. Wie zuvor erläutert werden die Federelemente 6 auf ein fahrbereites Niveau gestellt (Schritt 25).

Andererseits ist es denkbar, den Schwenkvorgang erst dann freizugeben, wenn ein Ausgleich in eine horizontale Lage oder zumindest unterhalb einer kritischen Neigung α_{Grenz} erfolgt ist. Weiterhin wäre es denkbar, einen automatischen Abbruch des Schwenkvorgangs einzuleiten, wenn die Neigung durch Bodeneinflüsse den Bereich überschreitet, welcher noch ausgeregelt werden kann, oder wenn der kritische Neigungswinkel α_{Grenz} während des Schwenkvorgangs überschritten wird.

## Patentansprüche

1. Vorrichtung (8) zur automatischen Einstellung des Horizontal-Niveaus eines Nutzfahrzeuges (1), das einen Aufbau (2), insbesondere mit einem um eine Längs- oder Querachse schwenkbaren Körper (3) aufweist, mit
einer Einrichtung (8') zur Niveauregulierung, die längenverstellbare Federelemente 6 und eine Steuereinheit 9 aufweist,
**dadurch gekennzeichnet, dass** die Vorrichtung (8) Sensormittel (15) zur Erfassung eines Winkels zwischen dem Aufbau (2) und der Horizontalen aufweist, und dass die Sensormittel (15) mit der Steuereinheit (9) verbindbar sind, um die Niveauregulierung in Abhängigkeit von dem erfassten Winkel auszulösen, wobei die Sensormittel (15) als ein Querbeschleunigungssensor ausgebildet sind.

2. Vorrichtung (8) nach Anspruch 1,
**dadurch gekennzeichnet, dass** die Sensormittel (15) zur Ausgabe eines Signals ausgebildet sind, welches dem von den Sensormitteln (15) erfassten Winkel zwischen dem Aufbau (2) und der Horizontalen zugeordnet ist, und
über Datenübertragungsmittel (13) mit der Steuereinheit (9) verbunden sind.

3. Vorrichtung (8) nach Anspruch 1 oder 2,
**dadurch gekennzeichnet, dass** die Steuereinheit (9) ausgebildet ist, abhängig von dem empfangenen Signal der Sensormittel (15) eine Längenverstellung der Federelemente (6) zu bewirken.

4. Vorrichtung (8) nach einem der vorstehenden Ansprüche,
**dadurch gekennzeichnet, dass** die Federelemente (6) durch Luftfederbälge ausgebildet sind.

5. Vorrichtung (8) nach einem der vorstehenden Ansprüche,
**dadurch gekennzeichnet, dass** die Federelemente (6) zwischen einer Mindest- und einer Höchstlänge einen stufenlosen Verstellbereich aufweisen.

6. Vorrichtung (8) nach Anspruch 5,
**dadurch gekennzeichnet, dass** die Sensormittel (15) weiterhin während der Fahrt des Nutzfahrzeugs (1) mit einem elektronischen Bremssystem (EBS) und / oder einem Stabilitätssystem (RSS) zusammenarbeiten.

7. Vorrichtung (8) nach einem der vorstehenden Ansprüche,
**dadurch gekennzeichnet, dass** die Steuereinheit (9) ausgebildet ist, ein Warnsignal auszugeben, falls ein Zustand vorliegt, in dem trotz ausgeschöpfter Längenverstellung der Federelemente (6) von den Sensormitteln (15) ein Signal übermittelt wird, das einem Winkel zwischen dem Aufbau (2) und der Horizontalen zuzuordnen ist, welcher einen Grenzwert überschreitet.

8. Vorrichtung (8) nach einem der vorstehenden Ansprüche,
**dadurch gekennzeichnet, dass** die Einrichtung (8') zur Niveauregulierung als eine ECAS-2-Punktregelung ausgebildet ist.

9. Vorrichtung (8) nach einem der vorstehenden Ansprüche,
**dadurch gekennzeichnet, dass** der schwenkbare Körper (3) durch eine Seiten- oder Heck-Kippmulde ausgebildet ist.

10. Verfahren zur automatischen Einstellung des Horizontal-Niveaus eines Nutzfahrzeuges (1), das einen Aufbau (2), insbesondere mit einem um eine Längs- oder Querachse schwenkbaren Körper (3), und
eine Einrichtung (8') zur Niveau-Regulierung, umfassend längenverstellbare Federelemente (6) und eine Steuereinheit (9), aufweist,
**gekennzeichnet durch** die Schritte:
Erfassung eines Winkels zwischen dem Aufbau (2) und der Horizontalen **durch** Sensormittel (15), wobei der Winkel zwischen dem Aufbau und der Horizontalen von einem Querbeschleunigungssensor erfasst wird und
Auslösung der Niveauregulierung **durch** die Steuereinheit (9) in Abhängigkeit von dem erfassten Winkel.

11. Verfahren nach Anspruch 10,
**dadurch gekennzeichnet, dass** die Sensormittel (15) nach Erfassung des Winkels zwischen dem Aufbau (2) und der Horizontalen ein Signal ausgeben, das dem erfassten Winkel zugeordnet ist, und das Signal mittels Datenübertragung an wie Steuereinheit (9) übergeben.

12. Verfahren nach Anspruch 10 oder 11,
**dadurch gekennzeichnet, dass** die Steuereinheit (9) eine von dem empfangenen Signal der Sensormittel (15) abhängige Längenverstellung der Federelemente (6) bewirkt.

13. Verfahren nach einem der Ansprüche 10 bis 12,
**dadurch gekennzeichnet, dass** die Steuereinheit (9) ein Warnsignal ausgibt, falls trotz der Ausschöpfung des gesamten Verstellweges der Federelemente (6) ein Signal von den Sensormitteln (15) übermittelt wird, das einem Winkel zwischen dem Aufbau (2) und der Horizontalen zuzuordnen ist, der einen Grenzwert überschreitet.

14. Verfahren nach einem der Ansprüche 10 bis 13,
**dadurch gekennzeichnet, dass** die Steuereinheit (9) vor Beginn eines Schwenkvorgangs, insbesondere eines Seiten- oder Heck-Kippvorgangs, eine maximale Verkürzung der Federelemente (6) zur Absenkung des Körperschwerpunktes des Aufbaus (2) bewirkt.

15. Verfahren nach einem der Ansprüche 10 bis 14,
**dadurch gekennzeichnet, dass** die Niveau-Regulierung während der Fahrt des Nutzfahrzeugs (1) unterhalb einer Grenzgeschwindigkeit erfolgt.

16. Verfahren nach einem der Ansprüche 10 bis 15,
**dadurch gekennzeichnet, dass** die Steuereinheit (9) eine Verstellung der Federelemente (6) auf eine Normallänge, welche zum Fahrbetrieb des Nutzfahrzeuges (1) geeignet ist, bewirkt, sobald eine Grenzgeschwindigkeit überschritten wird.

17. Nutzfahrzeug (1) mit einem Aufbau (2), welcher insbesondere eine um eine Längs- oder Querachse schwenkbaren Körper (3) aufweist, und
einer Vorrichtung (8) zur automatischen Einstellung des Horizontal-Niveaus,
**dadurch gekennzeichnet, dass** die Vorrichtung (8) nach einem der Ansprüche 1 bis 10 ausgebildet ist.

18. Nutzfahrzeug (1) nach Anspruch 17, **dadurch gekennzeichnet, dass** das Nutzfahrzeug (1) als ein Seiten- oder Heck-Kipplastwagen, eine Landmaschine oder ein Militärfahrzeug ausgebildet ist.

## Claims

1. Device (8) for automatically adjusting the horizontal ride level of a utility vehicle (1) which has a vehicle body (2), in particular with an element (3) which can pivot about a longitudinal axis or a transverse axis, with
a ride-level-control system (8') which has spring elements (6) of adjustable length and a control unit (9),
**characterized in that** the device (8) has sensor means (15) for sensing an angle between the vehicle body (2) and the horizontal, and **in that** the sensor means (15) can be connected to the control unit (9) in order to trigger the ride-level-control process as a function of the sensed angle, the sensor means (15) being embodied as a transverse acceleration sensor.

2. Device (8) according to Claim 1,
**characterized in that** the sensor means (15) are designed to output a signal which is assigned to the angle, sensed by the sensor means (15), between the vehicle body (2) and the horizontal, and
are connected to the control unit (9) via data transmission means (13).

3. Device (8) according to Claim 1 or 2, **characterized in that** the control unit (9) is designed to bring about length adjustment of the spring elements (6) as a function of the received signal of the sensor means (15).

4. Device (8) according to one of the preceding claims,
**characterized in that** the spring elements (6) are embodied by means of air spring bellows.

5. Device (8) according to one of the preceding claims,
**characterized in that** the spring elements (6) have an infinitely variable adjustment range between a minimum length and a maximum length.

6. Device (8) according to Claim 5,
**characterized in that** the sensor means (15) also cooperate with an electronic brake system (EBS) and/or a stability system (RSS) while the utility vehicle (1) is travelling.

7. Device (8) according to one of the preceding claims,
**characterized in that** the control unit (9) is designed to output a warning signal if a state is present in which, despite the length adjustment of the spring elements (6) being used up, the sensor means (15) transmit a signal which is to be assigned to an angle, which exceeds a limiting value, between the vehicle body (2) and the horizontal.

8. Device (8) according to one of the preceding claims,
**characterized in that** the ride-level-control system (8') is embodied as an ECAS 2-point controller.

9. Device (8) according to one of the preceding claims,
**characterized in that** the pivoting element (3) is embodied by means of a side-type or rear-type dumper trough.

10. Method for automatically adjusting the horizontal ride level of a utility vehicle (1) which has a vehicle body (2), in particular with an element (3) which can pivot about a longitudinal axis or a transverse axis, and
has a ride-level-control system (8') comprising spring elements (6) of adjustable length and a control unit (9),
**characterized by** the steps:
sensing of an angle between the vehicle body (2) and the horizontal by sensor means (15), the angle between the vehicle body and the horizontal being sensed by a transverse acceleration sensor and
triggering of the ride-level-control process by the control unit (9) as a function of the sensed angle.

11. Method according to Claim 10,
**characterized in that**, after the angle between the vehicle body (2) and the horizontal has been sensed, the sensor means (15) output a signal which is assigned to the sensed angle, and transfer the signal to the control unit (9) by means of data transmission.

12. Method according to Claim 10 or 11,
**characterized in that** the control unit (9) brings about length adjustment of the spring elements (6) as a function of the received signal of the sensor means (15).

13. Method according to one of Claims 10 to 12,
**characterized in that** the control unit (9) outputs a warning signal if, despite the fact that the entire adjustment travel of the spring elements (6) is used up, the sensor means (15) transmit a signal which is to be assigned to an angle, which exceeds a limiting value, between the vehicle body (2) and the horizontal.

14. Method according to one of Claims 10 to 13,
**characterized in that**, before a pivoting process, in particular a side-type or rear-type dumping process, starts, the control unit (9) brings about maximum shortening of the spring elements (6) in order to lower the centre of gravity of the vehicle body (2).

15. Method according to one of Claims 10 to 14,
**characterized in that** the ride-level-control operation takes place while the utility vehicle (1) is travelling at less than a limiting speed.

16. Method according to one of Claims 10 to 15,
**characterized in that**, as soon as a limiting speed is exceeded, the control unit (9) brings about adjustment of the spring elements (6) to a normal length which is suitable for the travel mode of the utility vehicle (1).

17. Utility vehicle (1) having a vehicle body (2) which has, in particular, an element (3) which can pivot about a longitudinal axis or a transverse axis, and
a device (8) for automatically adjusting the horizontal ride level,
**characterized in that** the device (8) is embodied according to one of Claims 1 to 9.

18. Utility vehicle (1) according to Claim 17,
**characterized in that** the utility vehicle (1) is embodied as a side-type or rear-type dumper truck, an agricultural machine or a military vehicle.

## Revendications

1. Dispositif (8) de réglage automatique du niveau horizontal d'un véhicule utilitaire (1) comprenant un châssis (2), comportant notamment un élément (3) pivotant autour d'un axe longitudinal ou transversal, comprenant un dispositif (8') de commande de niveau, comprenant des éléments à ressorts réglables en longueur (6) et une unité de commande (9),
**caractérisé en ce que** le dispositif (8) comprend des moyens de détection (15) pour détecter un angle entre le châssis (2) et l'horizontale, et **en ce que** le moyen de détection (15) peut être connecté à l'unité de commande (9) afin de déclencher la commande de niveau en fonction de l'angle détecté, dans lequel les moyens de détection (15) sont réalisés sous la forme d'un capteur d'accélération transversale.

2. Dispositif (8) selon la revendication 1,
**caractérisé en ce que** les moyens de détection (15) sont conçus pour délivrer un signal qui est associé à l'angle détecté par le moyen de détection (15) entre le châssis (2) et l'horizontale et qui sont appliqués à l'unité de commande (9) par l'intermédiaire de moyens de transmission de données (13).

3. Dispositif (8) selon la revendication 1 ou 2,
**caractérisé en ce que** l'unité de commande (9) est conçue pour produire un réglage en longueur des éléments à ressorts (6) en fonction du signal reçu des moyens de détection (15).

4. Dispositif (8) selon l'une quelconque des revendications précédentes,
**caractérisé en ce que** les éléments à ressorts (6) sont constitués par des coussins d'air.

5. Dispositif (8) selon l'une quelconque des revendications précédentes,
**caractérisé en ce que** les éléments à ressorts (6) présentent un domaine d'ajustement continu entre une longueur minimale et une longueur maximale.

6. Dispositif (8) selon la revendication 5,
**caractérisé en ce que** les moyens de détection (15) coopèrent en outre pendant le fonctionnement du véhicule utilitaire (1) avec un système électronique de freinage (EBS, Electronic Breaking System) et/ou avec un système de stabilité (RSS, Roll Stability System).

7. Dispositif (8) selon l'une quelconque des revendications précédentes,
**caractérisé en ce que** l'unité de commande (9) est conçue pour délivrer un signal d'alarme dans le cas de la présence d'un état dans lequel, malgré l'utilisation d'un réglage en longueur des éléments à ressorts (6) par les moyens de détection (15), on transmet un signal qui est associé à un angle entre la châssis (2) et l'horizontale dont la valeur est supérieure à une valeur limite.

8. Dispositif (8) selon l'une quelconque des revendications précédentes,
**caractérisé en ce que** le dispositif (8') est réalisé sous la forme d'une unité de commande ECAS à 2 points.

9. Dispositif (8) selon l'une quelconque des revendications précédentes,
**caractérisé en ce que** l'élément pivotant (3) est réalisé sous la forme d'une benne du type latéral ou du type arrière.

10. Procédé de réglage automatique du niveau horizontal d'un véhicule utilitaire (1) comprenant un châssis (2), comportant notamment un élément (3) pivotant autour d'un axe longitudinal ou transversal, et
un dispositif (8') de commande de niveau, comprenant des éléments à ressorts réglables en longueur (6) et une unité de commande (9),
**caractérisé par** les étapes consistant à :
détecter un angle entre le châssis (2) et l'horizontale à l'aide de moyens de détection (15), dans lequel l'angle entre le châssis et l'horizontale est détecté par un capteur d'accélération latérale, et
déclencher la commande automatique de niveau au moyen de l'unité de commande (9) en fonction de l'angle détecté.

11. Procédé selon la revendication 10,
**caractérisé en ce que** les moyens de détection (15), après détection de l'angle entre le châssis (2) et l'horizontale, délivrent un signal qui est associé à l'angle détecté, et envoient le signal par transmission de données à l'unité de commande (9).

12. Procédé selon la revendication 10 ou 11,
**caractérisé en ce que** l'unité de commande (9) effectue un réglage en longueur des éléments à ressorts (6) en fonction du signal reçu des moyens de détection (15).

13. Procédé selon l'une quelconque des revendications 10 à 12,
**caractérisé en ce que** l'unité de commande (9) délivre un signal d'alarme dans le cas où, malgré l'utilisation de la totalité de la course de réglage des éléments à ressorts (6), les moyens de détection (15) transmettent un signal qui est associé à un angle entre le châssis (2) et l'horizontale dont la valeur dépasse une valeur limite.

14. Procédé selon l'une quelconque des revendications 10 à 13,
**caractérisé en ce que** l'unité de commande (9), avant le début d'un processus de pivotement, notamment d'un processus de bennage de type latéral ou arrière, provoque un raccourcissement maximal des éléments à ressorts (6) afin d'abaisser le centre de gravité du châssis (2).

15. Procédé selon l'une quelconque des revendications 10 à 14,
**caractérisé en ce que** la commande de niveau s'effectue pendant le déplacement du véhicule utilitaire (1) en dessous d'une vitesse limite.

16. Procédé selon l'une quelconque des revendications 10 à 15,
**caractérisé en ce que** l'unité de commande (9) provoque un réglage des éléments à ressorts (6) sur une longueur normale qui est appropriée pour l'utilisation du véhicule utilitaire (1) pendant son déplacement dès qu'une vitesse limite est dépassée.

17. Véhicule utilitaire (1) comprenant un châssis (2) qui comporte notamment un élément pivotant (3) autour d'un axe longitudinal ou transversal, et
un dispositif (8) de réglage automatique du niveau horizontal, **caractérisé en ce que** le dispositif (8) est conçu conformément à l'une quelconque des revendications 1 à 9.

18. Véhicule utilitaire (1) selon la revendication 17,
**caractérisé en ce que** le véhicule utilitaire (1) est réalisé sous la forme d'un camion à benne du type latéral ou du type arrière, d'une machine agricole ou d'un véhicule militaire.
